# EUROPÄISCHE PATENTSCHRIFT

(11) **EP 1 750 877 B1**
(45) Veröffentlichungstag und Bekanntmachung des Hinweises auf die Patenterteilung: **07.04.2010**
(21) Anmeldenummer: 05743208.0
(22) Anmeldetag: 09.05.2005
(51) Int. Cl.: B23B 31/113

(54) **WERKSTÜCKSPANNSYSTEM**
WORKPIECE CLAMPING SYSTEM
SYSTEME DE SERRAGE DE PIECE

(30) Priorität: 17.05.2004 DE 102004025256
(43) Veröffentlichungstag der Anmeldung: 14.02.2007
(73) Patentinhaber: HAINBUCH GMBH SPANNENDE TECHNIK, D-71672 Marbach (DE)
(72) Erfinder: WELLER, Hans-Michael, 71563 Affalterbach (DE)
(74) Vertreter: Patentanwälte Ruff, Wilhelm, Beier, Dauster & Partner
(86) Internationale Anmeldenummer: PCT/EP2005/004983
(87) Internationale Veröffentlichungsnummer: WO 2005/113181

(56) Entgegenhaltungen:
- DE-A1- 10 234 210
- DE-A1- 10 323 662
- DE-U1- 8 914 083
- US-A- 5 667 228

## Beschreibung

Die Erfindung betrifft ein Werkstückspannsystem mit einer Maschinenspindel und einem Spannmittel zum Einspannen eines Werkstück, wobei das Spannmittel an der Maschinenspindel befestigbar ist. Insbesondere ist es auswechselbar und gewährleistet einen schnellen Wechsel von unterschiedlichsten Spannsystemen bzw. Spannmitteln.

Bei der zerspanenden Fertigung müssen die zu bearbeitenden Teile auf einer Maschine befestigt werden. Hierzu kommen unterschiedliche Spannvorrichtungen oder Aufspannsysteme zum Einsatz. Die Spannvorrichtung muss dabei der Gestalt des Teiles und der Bearbeitungsaufgabe entsprechen. Werden unterschiedliche Teile auf derselben Maschine gefertigt, so müssen die speziellen Vorrichtungen schnell und mit hoher Positioniergenauigkeit gewechselt werden können. Diese Aufgabenstellung wird bei sogenannten Bearbeitungszentren durch den Wechsel kompletter Vorrichtungspaletten mit so genanntem Nullspannsystem gelöst, wie sie beispielsweise in der DE 297 22 730 U1 und DE 101 23 268 A1 beschrieben sind. Derartige Nullspannsysteme verfügen zumeist über eine per Feder realisierte permanente Spannkraft. Die Positionierung und das Einleiten der notwendigen Spann- bzw. Haltekraft erfolgt über einen Einzugsnippel. Die auf diesen Nullspannvorrichtungen befestigten Spannsysteme sind in der Regel manuell betätigt oder mit zusätzlichen hydraulischen oder pneumatischen Anschlüssen ausgestattet. Die Halte- bzw. Einzugskraft der einzelnen Nullpunktspannvorrichtungen ist sehr gering. Daher werden mehrere Spannvorrichtungen für eine Werkstückaufspannpalette verwendet.

Die US 5,667,228 A beschreibt ein Werkstückspannsystem mit einer Einspannvorrichtung zum Einspannen von Werkstücken, bei der ein Bajonettverschluss verwendet wird. Mit diesem Bajonettverschluss wird ein Einsatz in einem dafür vorgesehenen Adapter befestigt und verspannt. Dazu haben sowohl der Einsatz als auch der Adapter kreisförmig angeordnete Vorsprünge, die jeweils eine Schräge aufweisen, welche in tangentialer Richtung leicht abfällt. Nach Einsetzen des Einsatzes in den Adapter kommen die jeweiligen Schrägen des Adapters und des Einsatzes im Zuge des Verdrehens des Einsatzes im Adapter in Kontakt miteinander und werden mit zunehmendem Verdrehen gegeneinander gespannt. Zum Aufrechterhalten dieser Verspannung können Klemmschrauben angezogen werden.

Bei Maschinen, bei denen das Werkstück zwecks Bearbeitung auf einer Maschinenspindel befestigt ist, kann hingegen nur eine Schnellwechselvorrichtung auf der Spindel montiert werden. Die für die Bearbeitung notwendigen Haltekräfte und die erforderlichen Steifigkeiten sind bei derartigen Maschinen, wie z.B. Abwälzfräsmaschinen, wesentlich höher. Hinzu kommt, dass kraftbetätigte Spannsysteme an den auf dem Markt bekannten Nullpunktspannsystemen nicht befestigt werden können, da eine Schnittstelle zu einer Kraftbetätigung, wie zum Beispiel einem Zylinder, fehlt. Daher eignen sich die bekannten Systeme nicht für Werkzeugmaschinen, welche am Spindelende über eine Kraftspanneinrichtung verfügen. Die bekannten Nullpunktspannsysteme sind zudem recht kompliziert aufgebaut.

### Aufgabe und Lösung

Der Erfindung liegt die Aufgabe zugrunde, ein eingangs genanntes Werkstückspannsystem zu schaffen, bei welchem das Befestigen sowie insbesondere das Auswechseln eines Spannmittels an einer Maschinenspindel zum einen schnell und zum anderen mit hoher Positioniergenauigkeit erreichbar ist, wobei das System möglichst einfach aufgebaut sein soll.

Gelöst wird diese Aufgabe durch ein Werkstückspannsystem mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Es ist vorgesehen, dass ein Bajonettverschluss an dem Werkstückspannsystem ausgebildet ist. Dieser kann durch Ansetzen des Spannmittels an die Maschinenspindel und eine Drehbewegung oder Drehbetätigung geschlossen werden. Um jedoch gegenüber einem üblichen Bajonettverschluss eine höhere Befestigungskraft mit resultierender genauerer Positionierung zu erreichen, sind Klemmmittel vorgesehen. Durch diese wird der Bajonettverschluss verklemmt zur festeren sowie lösungssicheren Befestigung.

Auf diese Art und Weise kann der Vorteil einer schnellen und einfachen Befestigung mittels eines Bajonettverschlusses genutzt werden, welcher an sich üblicherweise noch nicht einmal den Einsatz von Werkzeug bedingt. Durch die Kombination mit der Verklemmung durch die Verklemmmittel kann zum einen vermieden werden, dass sich der Bajonettverschluss von selber lockert oder sogar löst. Des weiteren kann durch die Verklemmung erreicht werden, dass die Verbindung zwischen Spannmittel und Maschinenspindel noch passgenauer und positionsgenauer sitzt. Es ist vorteilhaft möglich, dass bei der Verriegelung bzw. Verklemmung des Bajonettverschlusses das Spannmittel stärker gegen bzw. in die Maschinenspindel gezogen oder gedrückt wird. Das Verklemmen sollte auch möglichst einfach sowie sicher lösbar erfolgen, wobei sich darauf vorteilhafte Ausgestaltungen der Erfindung beziehen. Zudem weist die Vorrichtung einen einfachen Aufbau auf, um Wartungsarbeiten möglichst auszuschließen. Es kann auch mit dem Fügen des Werkstückspannsystems eine Kopplung mit einer Kraftspanneinrichtung der Maschine stattfinden.

Gemäß der Erfindung weist der Bajonettverschluss einerseits Vorsprünge an dem Spannmittel und andererseits Vorsprünge an der Maschinenspindel auf. Diese Vorsprünge sollten derart miteinander korrespondieren, dass sie die Funktion eines an sich bekannten Bajonettverschlusses ermöglichen. Im befestigten Zustand, also wenn der Bajonettverschluss hergestellt ist, liegen die Vorsprünge mit Kontakt-Flächen aneinander an. Diese Kontakt-Flächen verlaufen schräg zur Ansetzrichtung, also der Richtung, in welcher das Spannmittel an die Maschinenspindel herangeführt bzw. angesetzt wird. Diese Ansetzrichtung ist üblicherweise bei einer drehenden Maschinenspindel die Drehachse, so dass die Kontakt-Flächen auch schräg zur Drehachse der Maschinenspindel verlaufen. Erfindungsgemäß ist zumindest einer der Vorsprünge bewegbar in eine Richtung, welche schräg zu den Kontakt-Flächen ist bzw. schräg zur Ansetzrichtung. Besonders vorteilhaft ist er senkrecht zur Ansetzrichtung bewegbar, also in etwa genau in radialer Richtung. Dies bewirkt, dass durch das Bewegen des Vorsprungs der korrespondierende Vorsprung in Ansetzrichtung angezogen wird, was die eingangs genannte Verstärkung der Befestigung mit erhöhter Haltekraft ermöglicht.

Der bewegbare Vorsprung bzw. die Klemmmittel des Bajonettverschlusses sind vorteilhaft an der Maschinenspindel vorgesehen. Dies hat den Vorteil, dass zum einen an der Maschinenspindel sonstige Vorrichtungen wie Zugrohre oder eben Einrichtungen, welche die Verklemmung bewirken können, vorgesehen werden können. Dies ist häufig an Maschinenspindeln der Fall. Des weiteren können so verschiedene Spannmittel, insbesondere Spannfutter, die im einzelnen einfach ausgebildete und keine beweglichen Teile oder Vorsprünge aufweisen, an jeweils einer Maschinenspindel befestigt sein, ohne dass die Spannmittel selber zu den starren Vorsprüngen ihres Teiles des Bajonettverschlusses Modifikationen benötigen würden.

Zwar ist es grundsätzlich möglich, einen gesamten Vorsprung bewegbar auszubilden. Vorteilhaft ist jedoch nur ein Teil eines solchen Vorsprungs bewegbar, so dass der Vorsprung an sich fest ist und ein Teil davon bewegbar ist. Derartige Vorsprünge können beispielsweise relativ breit ausgebildet sein und ein mittlerer Teil davon ist bewegbar. So ist auf alle Fälle eine gewisse Haltekraft des Bajonettverschlusses gegeben, auch wenn der bewegbare Teil nicht bewegt wird oder gar ganz ausfällt, weil beispielsweise die Bewegbarkeit eingeschränkt ist durch Verschmutzen oder dergleichen.

Zur Bewegung des Vorsprungs und eines Teiles davon kann eine Kraft vorgesehen sein, insbesondere eine Spannkraft, welche gegen einen Spannring anliegt. Ein solcher Spannring ist vorteilhaft an sich lose gelagert bzw. aufgenommen und derart umlaufend ausgebildet, dass er an mehreren Vorsprüngen, insbesondere an allen Vorsprüngen, eines Teil des Werkstückspannsystems anliegt, also sozusagen auf einer Seite des Bajonettverschlusses. Dabei ist es bevorzugt vorgesehen, dass er entweder innerhalb der Vorsprünge oder außerhalb der Vorsprünge verläuft. In bevorzugter Ausführungsform sind mehrere bewegbare Vorsprünge oder mehrere bewegbare Teile vorgesehen, und zwar an jedem Vorsprung einer, wobei alle auf ähnliche Art und Weise gegen denselben Spannring anliegen.

Dabei kann zum Spannen eine Schraube die Kraftanlage zwischen einem bewegbaren Vorsprung oder einem Teil davon und dem Spannring herstellen. Vorteilhaft ist die Schraube dabei in einem entsprechenden Gewinde in dem Spannring gelagert und drückt gegen den Vorsprung. Besonders vorteilhaft ist für einen solchen Spannring nur eine einzige Schraube zum Spannen vorgesehen. Liegen alle bewegbaren Vorsprünge an dem Spannring an, so wird eine insgesamt gleichmäßig verteilte Spannkraft erzeugt, wie dies von solchen Spannringen allgemein bekannt ist. Ein solcher Spannring, der auch für eine gute Zentrierung sorgt, ist beispielsweise aus der DE 103 23 662 A bekannt, auf die hiermit ausdrücklich verwiesen wird.

Es ist möglich, dass der Teil des Bajonettverschlusses, der an dem Spannmittel ausgebildet ist, in die Maschinenspindel eingreift oder dabei in sie hineinragt. An dem hineinragenden Abschnitt sind radial abstehende Vorsprünge vorgesehen, insbesondere radial nach außen. Sie sind umgeben von korrespondierenden Vorsprüngen, die an der Maschinenspindel befestigt sind und den Teil des Bajonettverschlusses bilden, der an der Maschinenspindel ausgebildet ist. Auch hierbei wird es bevorzugt, wie zuvor genannt worden ist, wenn die bewegbaren Vorsprünge an der Maschinenspindel ausgebildet sind.

In einer alternativen Ausgestaltung der Erfindung ist ein Bajonettverschluss so ausgebildet, dass nur ein Teil von ihm, insbesondere der an dem Spannmittel ausgebildete Teil, verdrehbar ist bzw. verdreht werden muss zur Befestigung. Das Spannmittel an sich wird dann sowohl bei der Befestigung als auch bei der Verklemmung gegenüber der Maschinenspindel nicht verdreht oder bewegt. Dies weist den großen Vorteil auf, dass bei großen und unhandlichen Spannmitteln die Bewegung entfallen kann, sie also gegriffen und fixiert an der Maschinenspindel befestigt werden können. Des weiteren können so beispielsweise durchgehende Hydraulikleitungen zusammengeschlossen werden, welche durch entsprechende Anschlüsse zwischen Maschinenspindel und Spannmittel miteinander verbunden werden. Ebenso sind weitere funktionale Durchführungen möglich, wenn auf ein Verdrehen verzichtet werden kann.

Es kann an dem Spannmittel ein drehbarer Haltering vorgesehen sein, der den an den Spannmitteln ausgebildeten Teil des Bajonettverschlusses bildet. Der Haltering kann Vorsprünge aufweisen, die in radialer Richtung stehen. Mit ihnen arbeiten korrespondierende Vorsprünge an der Maschinenspindel zusammen. Wie zuvor ausgeführt worden ist, liegen die jeweiligen Vorsprünge mit Kontakt-Flächen aneinander an, welche schräg zur Ansetzrichtung verlaufen. Auch hier fällt die Ansetzrichtung vorteilhaft mit der Drehachse der Maschinenspindel zusammen. Auch bei dieser Ausgestaltung wird die Verklemmung des Bajonettverschlusses dadurch hergestellt, dass einer der Vorsprünge oder ein Teil davon bewegbar ist in einer Richtung schräg zur Kontakt-Fläche, vorteilhaft senkrecht zur Ansetzrichtung. Bezüglich weiterer Details hierzu wird auf die oben stehende allgemeine Beschreibung verwiesen.

Ein Vorsprung kann durch eine Kraft bewegt werden, welche gegen ein umlaufendes Kraftverteilelement oder einen Spannring wirkt, wie er zuvor beschrieben worden ist. Es kann ebenso eine zuvor genannte Spannschraube oder dergleichen vorgesehen werden, welche den Vorsprung oder einen Teil davon bewegt zur Verklemmung des Bajonettverschlusses. Alternativ zu einem zuvor genannten Spannring kann an einem Kraftverteilelement eine Schrägfläche vorgesehen sein, mit welcher es an dem bewegbaren Vorsprung anliegt. Die Schrägfläche verläuft schräg zu der Bewegungsrichtung des bewegbaren Vorsprungs oder seines Teils. Der Winkel zwischen Schrägfläche und Ansetzrichtung ist bevorzugt kleiner als 90°, vorteilhaft zwischen 45° und knapp 90°. Somit kann das Kraftverteilelement beispielsweise in Ansetzrichtung bewegt werden. Durch die Anlage der Schrägfläche an den bewegbaren Vorsprung wird dieser bewegt, wobei diese Bewegung als Verklemmung des Bajonettverschlusses ausgestaltet ist. Wie für den Spannring beschrieben, ist es von Vorteil, wenn sämtliche bewegbaren Vorsprünge an dem Kraftverteilelement anliegen. Somit ist mit einer Bewegung des Kraftverteilelements eine Bewegung aller Vorsprünge oder deren Teile möglich.

Vorteilhaft ist bei dieser Ausgestaltung der Erfindung vorgesehen, dass der Bajonettverschluss im Außenbereich des Werkstückspannsystems bzw. von Maschinenspindel und Spannmittel vorgesehen ist bzw. diese umgibt. Ein vorgenannter drehbarer Haltering kann außen angeordnet sein bzw. einen Teil des Umfangs des Spannmittels oder der Maschinenspindel bilden. Vorteilhaft ist er an seiner Außenumfangsfläche zugänglich, so dass er leicht gegriffen und gedreht werden kann.

Es kann von Vorteil sein, wenn diejenige Kraft, welche den Bajonettverschluss verklemmt, permanent anliegt. Dazu kann ein Energie- bzw. Kraftspeicher vorgesehen sein, beispielsweise eine Federeinrichtung. Es kann vorgesehen sein, dass mittels einer Löseeinrichtung und einer Lösekraft die Verklemmung des Bajonettverschlusses zum Schließen oder Öffnen jeweils aufgehoben wird. Entfällt diese Lösekraft, wird der Bajonettverschluss wiederum automatisch verklemmt bzw. verriegelt.

Vorteilhaft können für die bewegbaren Vorsprünge oder deren Teile Rückstellkräfte vorgesehen sein, welche permanent anliegen. Dazu können beispielsweise Rückstellfedern vorgesehen sein. Die Rückstellkräfte drücken die Vorsprünge oder deren Teile entgegen der Richtung zum Festklemmen. So kann gewährleistet werden, dass sich die bewegbaren Vorsprünge bei Wegfallen der Kraft zur Verklemmung selbsttätig lösen. Es ist durchaus im Rahmen der Erfindung möglich, sowohl die Kraft zur Verklemmung des Bajonettverschlusses permanent anliegen zu lassen als auch dass gleichzeitig die Rückstellkräfte an den bewegbaren Vorsprüngen angreifen. Allerdings werden die Rückstellkräfte durch die Kraft zur Verklemmung überwogen.

Zur Erzeugung einer ausreichend großen und möglichst gut wirksamen Positionierung sowie Befestigung kann vorgesehen sein, dass der Bajonettverschluss gleichmäßig bzw. symmetrisch ausgebildet ist. Dazu sind insbesondere Vorsprünge an der Maschinenspindel und/oder den Spannmitteln gleich verteilt. Des weiteren sollten sie insofern eine Drehsymmetrie aufweisen, als dass jeweils gleich groß ausgebildete Vorsprünge, unter Umständen mit jeweils bewegbaren Teilen, in gleichen Winkelabständen vorgesehen sind. Besonders bevorzugt werden jeweils drei Vorsprünge, welche um 120° zueinander versetzt sind.

Zur Erhöhung der Positioniergenauigkeit des Spannmittels in der Maschinenspindel kann ein Kegelabschnitt vorgesehen sein, der in die Maschinenspindel eingreift. Er liegt dort an einer korrespondierenden Kegelfläche an, wodurch eine genaue Positionierung bzw. Zentrierung erreicht wird. Durch eine hineinziehende Kraft, welche beispielsweise auch durch die Kraft bzw. die Verklemmung des Bajonettverschlusses aufgebracht werden kann, werden diese Kegelflächen ineinandergedrückt. Hier ist es auch möglich, zwischen Kegelabschnitt und Kegelfläche Wälzkörper vorzusehen, welche in Umfangsrichtung verteilt sind. Dies können Kugeln oder Walzen sein, welche unter Umständen in einer elastischen Halterung eingebettet sind. Dies wird beispielsweise in der DE 102 34 210 A1 beschrieben, auf welche diesbezüglich ausdrücklich verwiesen wird. So ist eine hohe Positioniergenauigkeit gewährleistet.

Des weiteren ist es möglich, eine Rasteinrichtung vorzusehen um durch Rastung eine Position vorzugeben zwischen Spannmittel und Werkzeugspindel, in welcher der Bajonettverschluss soweit geschlossen ist, dass anschließend die Verklemmung erfolgen kann. Alternativ zu einer Rasteinrichtung können Markierungen vorgesehen sein, welche einer Bedienperson anzeigen, wann der Bajonettverschluss verklemmt werden kann.

Als Spannschraube für einen Spannring oder ein Kraftverteilelement kann eine Schraube mit einem sogenannten Differenzgewinde verwendet werden. Sie greift einerseits mit einem Gewindeabschnitt in den Spannring und andererseits mit einem anderen Gewindeabschnitt in den bewegbaren Vorsprung oder den bewegbaren Teil. Durch unterschiedliche Steigungen bzw. unterschiedliche Richtungen der Steigung kann entweder eine Erhöhung der Kraft oder eine Erhöhung des zurückgelegten Betätigungsweges pro Drehung erreicht werden. Beispielsweise kann die Steigung des Gewindes in dem Vorsprung größer sein als diejenige in dem Spannring.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Verschiedene Ausführungsbeispiele der Erfindung sind in den Zeichnungen schematisch dargestellt und werden im folgenden näher erläutert. In den Zeichnungen zeigen:
- Fig. 1: einen seitlichen Schnitt durch eine erste Ausführung einer Ma- schinenspindel mit eingesetztem Spannfutter und innenliegen- dem Bajonettverschluss,
- Fig. 2: einen Schnitt durch eine Ansicht auf die Anordnung aus Fig. 1 von oben,
- Fig. 3 bis 5: Abwandlungen des Bajonettverschlusses in Ansichten ähnlich Fig. 1 als Detaildarstellung,
- Fig. 6: eine Abwandlung der Anordnung nach Fig. 1 mit außenliegen- dem Bajonettverschluss und innenliegender Verklemmung und
- Fig. 7: eine Schrägansicht der Anordnung aus Fig. 6.

### Detaillierte Beschreibung der Ausführungsbeispiele

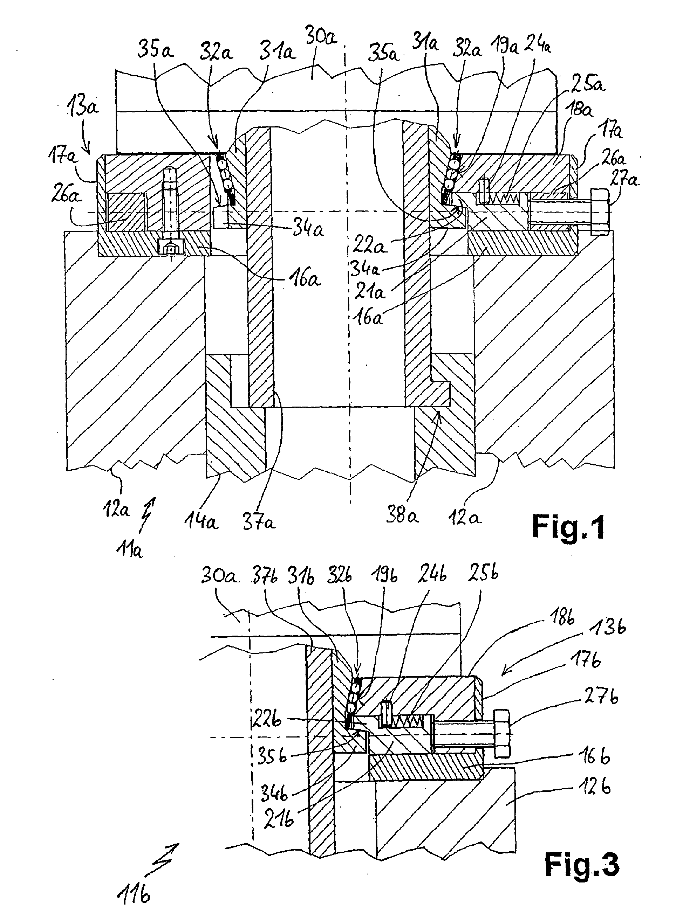

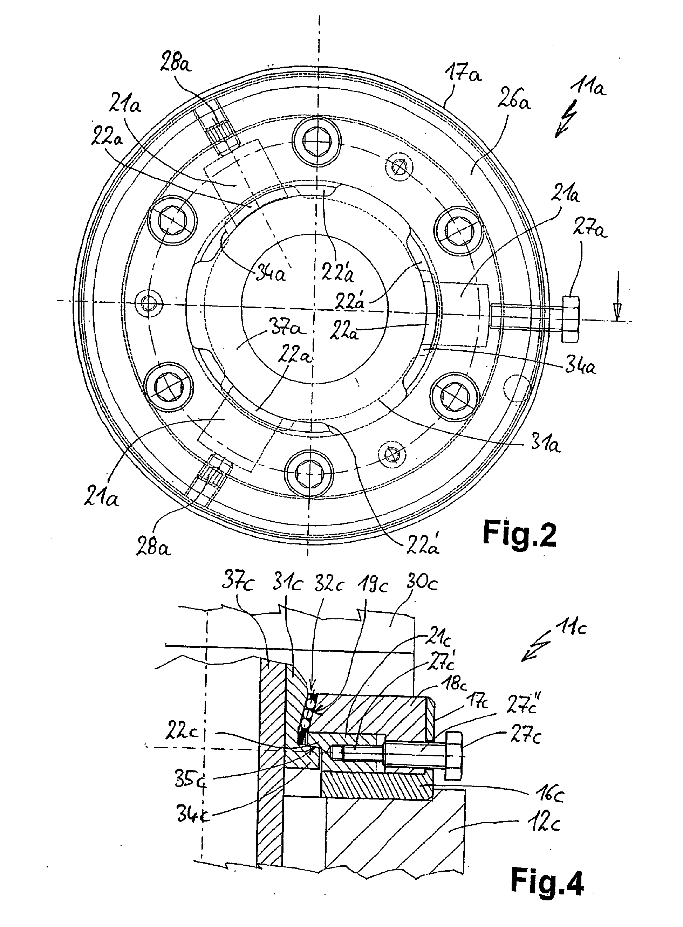

In Fig. 1 und 2 ist eine Maschinenspindel 11 a dargestellt, welche an sich üblich aufgebaut ist und einen Spindelkörper 12a aufweist, an den von vorne ein Ansetzbereich 13a anschließt. In einer mittigen Längsausnehmung der Maschinenspindel 11a im Spindelkörper 12a verläuft ein Zugrohr 14a, wie es bei Maschinenspindeln üblicherweise vorgesehen ist.

An die Maschinenspindel 11 a ist ein Spannfutter 30a angesetzt, welches hier nicht näher dargestellt ist, jedoch einem üblichen Spannfutter entspricht, welches beispielsweise in der DE 102 34 210 A beschrieben ist. Das Spannfutter 30a weist einen zentralen Kegelansatz 31 a auf, welcher in den Ansetzbereich 13a eingreift. Um eine konische Außenfläche am Kegelansatz 31 a herum verläuft eine Kugelmatte 32a. Auch dieses ist aus der vorgenannten DE 102 34 210 A bekannt.

An den Kegelansatz 31 a schließt sich nach unten ein Bereich an mit radial abstehenden Vorsprüngen 34a. Wie aus Fig. 2 zu erkennen ist, sind hier drei Vorsprünge 34a gegeben, welche Teil des noch zu beschreibenden Bajonettverschlusses sind. Die Vorsprünge 34a sind an ihrer Oberseite leicht abgeschrägt und bilden die schrägen Kontakt-Flächen 35a der Vorsprünge des Spannfutters 30a.

Des weiteren ragt durch den Kegelansatz 31a ein länglicher Zugrohradapter 37a. Mittels einer vorsprungartig ausgebildeten Zugverbindung 38a greift der Zugrohradapter 37a in das Zugrohr 14a der Maschinenspindel 11a bzw. entsprechende Vorsprünge. Die Herstellung bzw. Verriegelung der Zugverbindung 38a erfolgt vorteilhaft auf dieselbe Art und Weise wie bei dem noch zu beschreibenden Bajonettverschluss.

In dem Ansetzbereich 13a weist die Maschinenspindel 11a eine Grundplatte 16a auf, welche an dem Außenbereich einen hochstehenden und umlaufenden Rand 17a aufweist. Von oben ist eine Deckplatte 18a ein- und aufgesetzt, welche mit dem Rand 17a in etwa abschließt und eine geschlossene Verbindung herstellt. Es sind drei Klinken 21 a zwischen Grundplatte 16a und Deckplatte 18a vorgesehen, welche nach innen ragende Vorsprünge 22a aufweisen. Wie aus der Draufsicht in Fig. 2 zu erkennen ist, bilden diese Vorsprünge 22a einen kleinen Bereich von breiteren Vorsprüngen 22a', welche Teil der Deckplatte 18a sind. Es ist zu erkennen, wie die bewegbaren Vorsprünge 22a in etwa mittig an den festen Vorsprüngen 22a' angeordnet sind.

Mittels eines Führungsstiftes 24a und einer Rückholfeder 25a, welche in eine Aussparung an der Oberseite der Klinke 21a eingreifen, wird eine Führung der Klinken erreicht sowie diese selbsttätig radial nach außen gedrückt. Dies wird nachfolgend noch genauer erläutert.

Um die Klinken 21a herum verläuft ebenfalls zwischen Grundplatte 16a und Deckplatte 18a ein mechanisch stabiler und geschlossener Spannring 26a. In einem Gewinde in dem Spannring 26a verläuft eine Spannschraube 27a, welche von außen zugänglich ist. An den anderen beiden Klinken 21a liegen ebenfalls in den Spannring 26a eingeschraubte Justierschrauben 28a an.

### Funktion des Ausführungsbeispiels gemäß Fig. 1 und 2

Eine Verbindung zwischen Maschinenspindel 11a und Spannfutter 30a gemäß Fig.1 und 2 wird folgendermaßen hergestellt:

Das Spannfutter 30a wird mit dem Zugrohradapter 37a voran in die Maschinenspindel 11a eingeführt. Dabei kommt die Kugelmatte 32a mit den an der Deckplatte 18a ausgebildeten Lagerflächen 19a in Anlage, wodurch eine genaue Zentrierung und Positionierung erfolgt. Die Vorsprünge 34a des Spannfutters 30a fahren dabei zwischen den Vorsprüngen 22a' an der Maschinenspindel 11a vorbei. Gleiches gilt für die Zugverbindung 38a.

Anschließend wird das Spannfutter 30a ein Stück gedreht, und zwar so weit, bis die Vorsprünge 34a genau mittig zu den Vorsprüngen 22a bzw. Klinken 21a liegen. Dies bedeutet, dass sie auch gleichzeitig die Vorsprünge 22a' untergreifen. Da die Vorsprünge 34a deutlich breiter sind als die Vorsprünge 22a, wie aus Fig. 2 in der gestrichelten Darstellung zu erkennen ist, ist der somit gebildete Bajonettverschluss auf alle Fälle verriegelt. Gleiches gilt für die nicht näher dargestellte Zugverbindung 38a. Um beim Drehen des Spannfutters 30a nach dem Einsetzen in die Maschinenspindel 11a die genaue Endposition zu finden, können hierfür Anschläge, Rastmittel oder alternativ auch Markierungen vorgesehen sein.

Während des Einsetzens ist die Spannschraube 27a herausgedreht, so dass die Klinke 21 a von der Rückholfeder 25a gegen den Stift 24a nach außen gedrückt wird. Ähnliches gilt für sämtliche Klinken 21 a, welche ähnliche Rückholfedern aufweisen. Zur Verklemmung des Bajonettverschlusses wird die Spannschraube 27a in den Spannring 26a hineingedreht, wobei sie in Anlage mit der Außenseite der Klinke 21 a kommt. Dadurch wird die Klinke 21a radial nach innen gedrückt. Die schrägen Kontakt-Flächen 35a der Vorsprünge 22a und 34a bewirkt eine Verspannung bzw. Verklemmung der Verbindung. Damit dieses Verklemmen die genaue Positionierung bzw. Zentrierung des Kegelansatzes 31a in der Maschinenspindel 11a nicht beeinträchtigt, ist der umlaufende Spannring 26a vorgesehen. Durch das Festziehen der Spannschraube 27a wird der Spannring 26a nach rechts außen gezogen. Dies bedeutet, dass er gleichzeitig über die Justierschrauben 28a gegen die Außenseiten der beiden anderen Klinken 21 a anliegt und somit diese bzw. deren Vorsprünge 22a gegen die entsprechenden Vorsprünge 34a des Spannfutters 30a drückt. Dadurch erfolgt zum einen eine Verklemmung aller drei Vorsprünge 34a des Spannfutters 30a. Des weiteren erfolgt diese Verklemmung gleichmäßig derart, dass sie die Zentrierung bzw. Positionierung des Spannfutters 30a an der Maschinenspindel 11a nicht verändert. Eine Justierung zur Anpassung der Maschinenspindel 11a kann beispielsweise über die Justierschrauben 28a erfolgen.

Nach dem Anziehen der Spannschraube 27a bis zu einer gewissen vorgegebenen Kraft ist der Bajonettverschluss nicht nur geschlossen, sondern auch verklemmt. Dabei ist das Spannfutter 30a bzw. der Kegelansatz 31a noch ein kleines Stück weiter in die Lagerfläche 19a der Maschinenspindel 11a hineingezogen. Dadurch wird die Befestigung noch weiter erhöht.

### Detaillierte Beschreibung der weiteren Ausführungsbeispiele

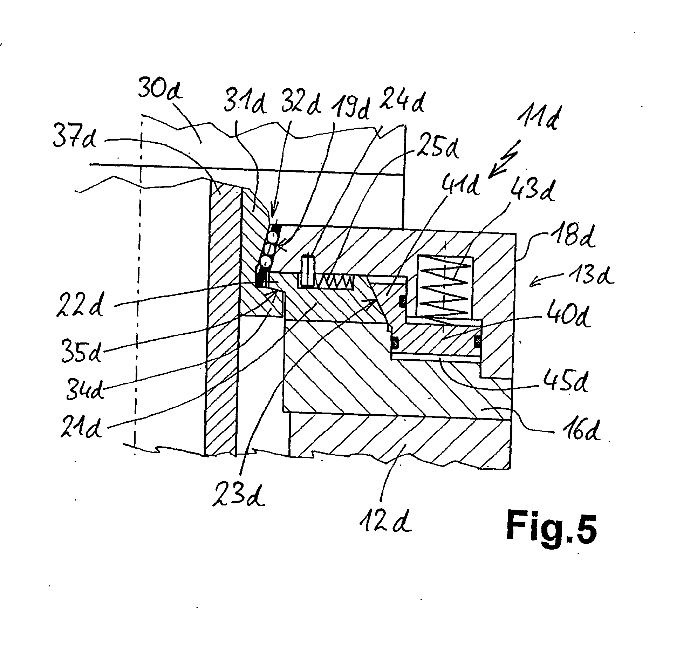

In Fig. 3 ist lediglich als Ausschnitt eine Abwandlung dargestellt, wobei sich diese auf den Ansetzbereich 13b der Maschinenspindel 11 b beschränkt. Auf eine an sich ähnlich wie in Fig. 1 ausgebildete Grundplatte 16b mit Randbereich 17b an dem Spindelkörper 12b ist eine anders ausgebildete Deckplatte 18b gesetzt. Hier ist kein separater, freier und schwimmend gelagerter Spannring vorgesehen. Dafür weist die Deckplatte 18b einen nach unten gezogenen Bereich auf. In diesem ist ein Gewinde für eine Spannschraube 27b vorgesehen, welche an einer Klinke 21 b anliegt. Diese wiederum ist entsprechend derjenigen aus Fig. 1 ausgebildet. Bei einer solchen Ausgestaltung ist entweder insgesamt nur eine einzige bewegbare Klinke 21 b vorgesehen, welche mittels der Spannschraube 27b bewegt wird und eine Verklemmung des Bajonettverschlusses an einer einzigen Stelle bewirkt. Alternativ können mehrere bewegbare Klinken 21 b vorgesehen sein mit jeweils einer Spannschraube 27b in einem nach unten gezogenen Bereich. Das Spannfutter 30b samt Kegelansatz 31 b und Vorsprüngen 34b ist identisch wie in Fig. 1 ausgebildet. Dieses gilt auch für die weiteren Fig. 4 und 5.

In Fig. 4 ist eine weitere alternative Ausbildung des Ansetzbereichs 13c dargestellt. Im Vergleich zu Fig. 3 sind Grundplatte 16c und Deckplatte 18c gleich ausgebildet- Die bewegbare Klinke 21 c jedoch weist ein Gewinde auf, welches kleiner ist als dasjenige in der Deckplatte 18c und eine andere Steigung aufweist. In die beiden Gewinde in der Deckplatte 18c und der Klinke 21 c ist eine Spannschraube 27c eingeschraubt. Diese ist als sogenannte Differenzschraube ausgebildet und weist zwei verschiedene Gewindebereiche 27c' und 27c" auf. Dadurch kann zum einen eine höhere Kraft zum Verklemmen des Bajonettverschlusses bzw. zum Bewegen der Klinke 21 c ausgeübt werden. Des weiteren kann damit die Klinke 21c auch bewusst gezielt nach außen gezogen werden, selbst wenn diese verklemmen sollte und ansonsten die Kraft einer Rückholfeder ähnlich Fig. 1 bis 3 nicht ausreichen sollte. Auch bei dieser Ausbildung ist pro bewegbarer Klinke 21c eine eigene Spannschraube 27c vorgesehen.

Des weiteren ist eine Ausbildung möglich, bei welcher eine Differenzschraube bei einem Spannring gemäß Fig. 1 für eine Klinke verwendet wird. Werden dort die anderen bewegbaren Klinken ebenfalls fest mit dem Spannring verbunden, beispielsweise indem Schrauben ähnlich der Justierschrauben in die Klinken fest eingreifen, so ist auch hier ein kraftbeaufschlagtes Lösen der Verklemmung durch Zurückziehen aller Klinken möglich.

In der weiteren Alternative gemäß Fig. 5 bilden Grundplatte 16d und Deckplatte 18d wiederum eine Art geschlossenes Gehäuse für den Ansetzbereich 13d. Die bewegbaren Klinken 21d weisen wiederum Führungsstifte 24d und Rückholfedern 25d auf. An der rechten Außenseite weisen sie Schrägseiten 23d auf, welche nach unten breiter werden.

Zum Bewegen bzw. Verriegeln der Klinken 21 d ist ein Verriegelelement 40d vorgesehen. Dieses weist einen Schrägabschnitt 41d auf, der an der Schrägseite 23d der Klinke 21d anliegt. Mittels einer Druckfeder 43d wird das Verriegelelement 40d nach unten gedrückt, wodurch der Schrägabschnitt 41 d an der Schrägseite 23d nach unten läuft und diese radial nach innen drückt zum Verriegeln des Bajonettverschlusses an den Vorsprüngen 22d und 34d. Dabei ist selbstverständlich, dass die Druckfeder 43d relativ stark ausgebildet sein sollte.

Zum Lösen der Verriegelung ist zwischen Verriegelelement 40d und Grundplatte 16d eine Druckkammer 45d vorgesehen. In diese kann ein Fluid eingebracht werden, beispielsweise Druckluft oder Hydraulikflüssigkeit. Dieses Fluid drückt das Verriegelelement 40d nach oben und ermöglicht somit eine Bewegung der Klinke 21d durch die Rückholfeder 25d bewirkt radial nach außen.

Anstelle der Druckfeder 43d und der Druckkammer 45d können auch andere Spannmittel vorgesehen sein. Beispielsweise kann von oben her durch die Deckplatte 18d eine Schraube eingeschraubt sein und das Verriegelelement 40d nach unten drücken. Diese Schraube kann auch wie eine Differenzschraube ähnlich derjenigen Differenzschraube gemäß Fig. 4 ausgeführt sein und so eine Bewegung des Verriegelelements 40d sowohl nach oben als auch nach unten bewirken.

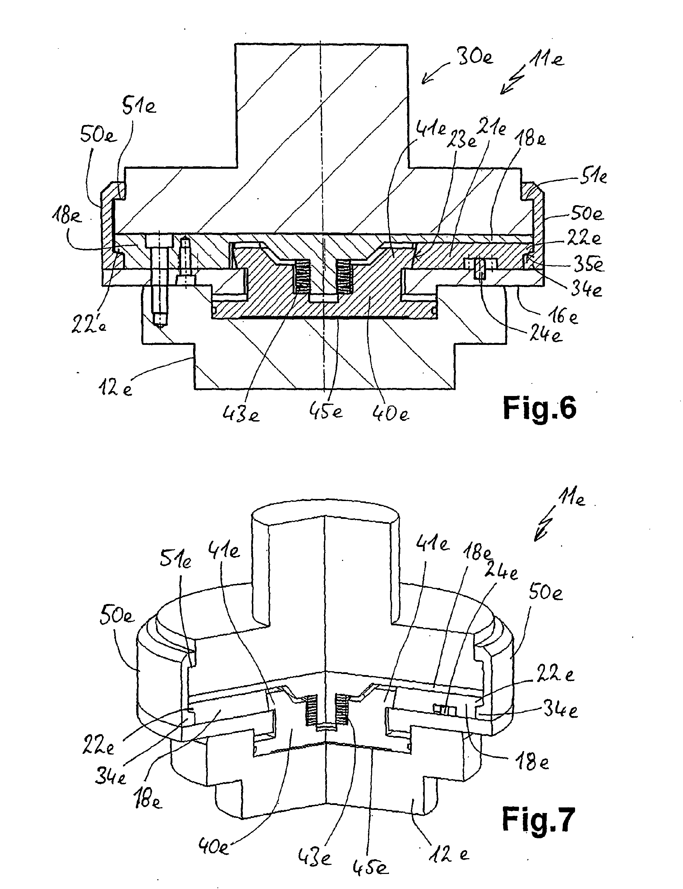

In Fig. 6 ist eine grundsätzlich andere Ausführung eines Bajonettverschlusses dargestellt. An einen Spindelkörper 12e einer Maschinenspindel 11e, welche keine innenliegende Zugeinrichtung aufweist, ist ein Spannfutter 30e angesetzt. Dabei weist der Spindelkörper 12e wieder eine aufgesetzte Grundplatte 16e auf, welche durch eine Deckplatte 18e geschlossen ist. Beide sind verschraubt, wie links in Fig. 6 zu erkennen ist. Zwischen Grundplatte 16e und Deckplatte 18e sind bewegbare Klinken 21e vorgesehen, vorteilhaft drei Stück, welche gleichmäßig verteilt sind. Diese sind durch einen Führungsstift 24e geführt, wobei Rückholfedern vorgesehen sein könnten wie bei den vorherigen Ausführungsbeispielen.

Die Klinken 21e weisen radial nach außen ragende Vorsprünge 22e auf, welche nach unten weisende schräge Kontakt-Flächen 35e besitzen. Am radial inneren Ende weisen sie Schrägseiten 23e auf.

Mittig in dem Ansetzbereich 13e ist ein Verriegelelement 40e gelagert, welches Schrägabschnitte 41 e aufweist, die an den Schrägseiten 23e der Klinke 21e anliegen. Wird das Verriegelelement 40e durch die Druckfeder 43e nach unten gedrückt, also in die Maschinenspindel 11e hinein, drückt der Schrägabschnitt 41 e über die Schrägseite 23e die Klinke 21e radial nach außen. Ein Zurückstellen des Verriegelelements 40e kann beispielsweise über eine Druckkammer 45e erfolgen, wie sie für Fig. 5 beschrieben worden ist. Alternativ können andere Rückstellungen vorgesehen werden.

Das Spannfutter 30e weist am unteren Bereich eine Verbreiterung auf, welche einen umlaufenden Bajonettring 50e aufweist. Dieser ist im Umfang vollständig geschlossen und drehbar gelagert. Mit Vorsprüngen 51e kann er das Spannfutter 30e übergreifen.

Am unteren Ende des Bajonettrings 50e sind Vorsprünge 34e ausgebildet, und zwar entsprechend zu den bewegten Klinken 21 e. Die Vorsprünge 34e weisen schräge Kontakt-Flächen 35e auf, an denen die Vorsprünge 22e der Klinken 21 e entsprechend anliegen können. Bezüglich dieser den Bajonettverschluss bildenden Teile ist die Anordnung gemäß der Fig. 6 ähnlich denjenigen aus Fig. 2 ausgebildet. Zum Aufsetzen des Spannfutters 30e an den Spindelkörper 12e wird der Bajonettring 50e in eine Stellung gebracht, in welcher er mit seinen Vorsprüngen 34e an entsprechenden Vorsprüngen 22'e des Spindelkörpers 12e vorbeiläuft. Durch Drehen des Bajonettrings 50e hintergreifen dessen Vorsprünge 34e die Vorsprünge 22e' sowie die Vorsprünge 22e an den Klinken 21e. Wird zum Verriegeln ein Druck aus der Druckkammer 45e abgelassen werden, wird das Verriegelelement 40e nach unten gedrückt und gleichzeitig die Klinken 21 e nach außen drückt. Durch Bewegen der Klinken 21 e nach außen erfolgt dann ein Verriegeln bzw. Verklemmen des Bajonettverschlusses.

Aus der Schrägdarstellung in Fig. 7 ist besonders gut der umlaufende Bajonettring 50e zu erkennen. Des weiteren ist der Schnitt in Fig. 7 entlang zweier bewegbaren Klinken 21e durchgeführt, wobei lediglich bei der rechten der Führungsstift 24e zu erkennen ist.

Ähnlich wie die Vorsprünge gemäß Fig. 2 sind die Vorsprünge 34e gemäß Fig. 6 und 7 auf einen bestimmten Umfangswinkelbereich begrenzt. Dies gilt auch für die Vorsprünge 22'e und die bewegbaren Teile 22'.

Die Anordnung nach Fig. 6 und 7 weist den Vorteil auf, dass zum Herstellen des Bajonettverschlusses das Spannfutter 30e gegenüber der Maschinenspindel 11 e und dem Spindelkörper 12e nicht gedreht werden muss, sondern lediglich der Bajonettring 50e. Dadurch ist es möglich, beispielsweise ähnlich wie die links dargestellten Verschraubungen, durchgehende, beim Aufsetzen sich verbindende Hydraulikleitungen oder dergleichen vorzusehen. So kann ein Spannfutter 30e nicht nur mechanisch an die Maschinenspindel 11 e angekoppelt werden, sondern auch gleichzeitig mit durchgehenden Funktionen bzw. Ansteuerungen versehen werden.

## Patentansprüche

1. Werkstückspannsystem mit einer Maschinenspindel (11) und einem Spannmittel (30) zum Einspannen eines Werkstücks, wobei das Spannmittel an der Maschinenspindel ansetzbar und befestigbar ist, mit einem Bajonettverschluss (22, 34) zur Befestigung des Spannmittels durch eine Ansetzbewegung und eine Drehbewegung, wobei der Bajonettverschluss durch Klemmmittel (21, 22, 23, 34) verklemmbar bzw. verriegelbar ist zur lösungssicheren Befestigung, **dadurch gekennzeichnet, dass** der Bajonettverschluss (22, 34) Vorsprünge (34) an dem Spannmittel (30) und Vorsprünge (22) an der Maschinenspindel (11) aufweist, die im befestigten Zustand mit Kontakt-Flächen (23) aneinander anliegen, wobei die Kontakt-Flächen schräg zur Ansetzrichtung des Spannmittels an die Maschinenspindel verlaufen und wobei mindestens einer der Vorsprünge (21, 22) bewegbar ist in Richtung schräg zu den Kontakt-Flächen (23) zur Verklemmung des Bajonettverschlusses (22, 34).

2. Werkstückspannsystem nach Anspruch 1, **dadurch gekennzeichnet, dass** der bewegbare Vorsprung senkrecht zur Ansetzrichtung bewegbar ist, wobei vorzugsweise der bewegbare Vorsprung (21, 22) bzw. die Klemmmittel (21, 22, 23, 34) an der Maschinenspindel (11) vorgesehen sind.

3. Werkstückspannsystem nach Anspruch 1 oder 2, **dadurch gekennzeichnet, dass** der Vorsprung (21, 22) bewegbar ist durch eine Kraft, die gegen einen lose aufgenommenen, umlaufenden Spannring (26, 40) anliegt, wobei insbesondere der Spannring geschlossen ist und stabil ausgebildet ist und vorzugsweise mehrere bewegbare Vorsprünge (21, 22) vorgesehen sind und diese alle gegen den Spannring anliegen.

4. Werkstückspannsystem nach Anspruch 3, **gekennzeichnet durch** eine Kraftanlage zwischen einem bewegbaren Vorsprung (21, 22) und dem Spannring (26) mittels einer Schraube (27, 28), wobei vorzugsweise die Schraube in dem Spannring gelagert ist und gegen den Vorsprung drückt, wobei insbesondere die Spannschraube (27c) ein Differenzgewinde (27c', 27c") aufweist und in den Spannring und den bewegbaren Vorsprung eingreift und vorzugsweise die Steigung des Gewindes (27c') in dem Vorsprung (21) größer ist als diejenige (27c") in dem Spannring.

5. Werkstückspannsystem nach einem der vorhergehenden Ansprüche, **dadurch gekennzeichnet, dass** der Teil des Bajonettverschlusses (22, 34) am Spannmittel (30) in die Maschinenspindel (11) eingreift bzw. hineinragt mit radial abstehenden Vorsprüngen (34) und umgeben ist von den Vorsprüngen (21, 22) in der Maschinenspindel als Teil des Bajonettverschlusses, wobei vorzugsweise um die Vorsprünge der Maschinenspindel herum ein Spannring (26) nach Anspruch 4 verläuft.

6. Werkstückspannsystem nach Anspruch 1, **gekennzeichnet durch** einen Bajonettverschluss (22e, 34e), der derart ausgebildet ist, dass ausschließlich ein Teil (34e, 50e) von ihm, der an dem Spannmittel (30e) vorgesehen ist, verdrehbar ist zur Befestigung, wobei im übrigen die Befestigung und Verklemmung des Spannmittels an der Maschinenspindel (11e) verdrehungsfrei und/oder bewegungsfrei ist.

7. Werkstückspannsystem nach Anspruch 6, **gekennzeichnet durch** einen drehbaren Haltering (50e), vorzugsweise an dem Spannmittel (30e), der als einen Teil des Bajonettverschlusses (22e, 34e) in radialer Richtung weisende Vorsprünge (34e) aufweist, die im befestigten Zustand mit radial abstehenden Vorsprüngen (22e) am anderen Teil des Werkstückspannsystems zusammenwirken, wobei die Vorsprünge mit Kontakt-Flächen (35e) aneinander anliegen, die schräg zur Ansetzrichtung verlaufen, wobei insbesondere mindestens einer der Vorsprünge (21 e, 22e) bewegbar ist in Richtung schräg zu der Kontakt-Fläche zur Verklemmung.

8. Werkstückspannsystem nach Anspruch 7, **dadurch gekennzeichnet, dass** der bewegbare Vorsprung (21e, 22e) durch eine Kraft bewegbar ist, die gegen ein umlaufendes Kraftverteilelement (40e) wirkt, wobei vorzugsweise mehrere bewegbare Vorsprünge vorgesehen sind und diese alle gegen das Kraftverteilelement anliegen.

9. Werkstückspannsystem nach Anspruch 8, **dadurch gekennzeichnet, dass** das Kraftverteilelement (40e) mit einer Schrägfläche (41e) an dem bewegbaren Vorsprung (22e) anliegt, welche schräg, insbesondere mit einem Winkel zwischen 45° und etwas weniger als 90°, zu der Bewegungsrichtung des bewegbaren Vorsprungs verläuft, wobei durch Bewegung des Kraftverteilelements entlang der Längsrichtung der Maschinenspindel (11e) der wenigstens eine bewegbare Vorsprung an der Schrägfläche anliegend bewegt wird zur Verklemmung des Bajonettverschlusses (22e, 34e), wobei vorzugsweise sämtliche bewegbaren Vorsprünge (21e, 22e) an dem Kraftverteilelement (40e) anliegen.

10. Werkstückspannsystem nach einem der vorhergehenden Ansprüche, **dadurch gekennzeichnet, dass** die Kraft zur Verklemmung des Bajonettverschlusses (22, 34) permanent anliegt, insbesondere von einem Energiespeicher oder Kraftspeicher erzeugt ist, vorzugsweise einer Federeinrichtung (43), wobei insbesondere durch eine Löseeinrichtung (45) mit einer Lösekraft diese Kraft zur Verklemmung aufhebbar ist zur Lösung des Bajonettverschlusses.

11. Werkstückspannsystem nach einem der vorhergehenden Ansprüche, **gekennzeichnet durch** eine Rasteinrichtung für eine Rastung in der Position zwischen Spannmittel (30) und Maschinenspindel (11), in welcher der Bajonettverschluss (22, 34) geschlossen ist zur anschließenden Verklemmung.

## Claims

1. A workpiece clamping system with a machine spindle (11) and clamping means (30) for clamping a workpiece, the clamping means being attachable and fixable to the machine spindle, having a bayonet lock (22, 34) for fixing the clamping means through an attachment movement and a rotary movement, the bayonet lock being clampable or lockable by locking means (21, 22, 23, 34) for release-protected fixing, **characterized in that** the bayonet lock (22, 34) has projections (34) on the clamping means (30) and projections (22) on the machine spindle (11), which in the fixed state are in engagement with contact faces (23), which are inclined to the attachment direction of the clamping means on the machine spindle, and at least one of the projections (21, 22) being movable in a direction inclined to contact faces (23) for locking the bayonet lock (22, 34).

2. The workpiece clamping system according to claim 1, **characterized in that** the movable projection is movable perpendicular to the attachment direction and preferably the movable projection (21, 22) or locking means (21, 22, 23, 34) are provided on the machine spindle (11).

3. The workpiece clamping system according to claim 1 or 2, **characterized in that** the projection (21, 22) is movable by a force against a loosely received, revolving clamping ring (26, 40) and in particular the clamping ring is closed and has a stable construction, there preferably being several movable projections (21, 22) and all engage against the clamping ring.

4. The workpiece clamping system according to claim 3, **characterized by** a force means between a movable projection (21, 22) and the clamping ring (26) by means of a screw (27, 28), the screw preferably being mounted in the clamping ring and presses against the projection and in particular the clamping screw (27c) has a differential thread (27c', 27c") and engages in the clamping ring and the movable projection and preferably the pitch of the thread (27c') in projection (21) is greater than that (27c") in the clamping ring.

5. The workpiece clamping system according to any of the preceding claims, **characterized in that** the part of the bayonet lock (22, 34) on clamping means (30) engages or projects into the machine spindle (11) with radially protruding projections (34) and is surrounded by the projections (21, 22) in the machine spindle as part of the bayonet lock and preferably a clamping ring (26) according to claim 4 passes round the machine spindle projections.

6. The workpiece clamping system according to claim 1, **characterized by** a bayonet lock (22e, 34e) constructed in such a way that exclusively one part (34e, 50e) thereof provided on the clamping means (30e) is rotatable for fixing purposes and otherwise the fixing and locking of the clamping means on machine spindle (11e) is rotation-free and/or movement-free.

7. The workpiece clamping system according to claim 6, **characterized by** a rotatable retaining ring (50e), preferably on the clamping means (30e), which as part of the bayonet lock (22e, 34e) has radially directed projections (34e), which in the fixing state cooperate with radially protruding projections (22e) on the other part of the workpiece clamping system, the projections engaging on one another with contact faces (35e), which are inclined to the attachment direction and in particular at least one of the projections (21 e, 22e) is movable in a direction inclined to the contact face for locking purposes.

8. The workpiece clamping system according to claim 7, **characterized in that** the movable projection (21 e, 22e) is movable by a force acting counter to a circumferential force distributing element (40e) and preferably there are several movable projections and all engage against the force distributing element.

9. The workpiece clamping system according to claim 8, **characterized in that** the force distributing element (40e) engages with an inclined face (41 e) on the movable projection (22e), which is inclined, particularly by an angle between 45° and somewhat less than 90° to the movement direction of the movable projection and through movement of the force distributing element along the longitudinal direction of the machine spindle (11e) the at least one movable projection engaging on the inclined face is moved for locking the bayonet lock (22e, 34e) and preferably all the movable projections (21 e, 22e) engage on the force distributing element (40e).

10. The workpiece clamping system according to any of the preceding claims, **characterized in that** the force for locking the bayonet lock (22, 34) is permanently applied, more particularly being produced by an energy or force storage device, preferably a spring mechanism (43), and more particularly through a release device (45) with a release force this locking force can be cancelled out for releasing the bayonet lock.

11. The workpiece clamping system according to any of the preceding claims, **characterized by** a catching device for catching in the position between the clamping means (30) and machine spindle (11) in which the bayonet lock (22, 34) is closed for subsequent locking.

## Revendications

1. Système de serrage de pièces à usiner avec un arbre (11) de machine et un moyen de serrage (30) pour le serrage d'une pièce à usiner, sachant que le moyen de serrage peut être placé et fixé sur l'arbre de machine, présentant une fermeture à baïonette (22, 34) pour fixer le moyen de serrage par un mouvement de placement et un mouvement de rotation, sachant que la fermeture à baïonette peut être bloquée ou encore verrouillée par des moyens de blocage (21, 22, 23, 34) pour une fixation résistant au détachement, **caractérisé en ce que** la fermeture à baïonette (22, 34) présente des saillies (34) sur le moyen de serrage (30) et des saillies (22) sur l'arbre (11) de la machine, qui sont adjacentes les unes aux autres par des surfaces de contact quand la fermeture à baïonette se trouve en état fixé, sachant que les surfaces de contact s'étendent en direction oblique par rapport à la direction de placement du moyen de serrage à l'arbre de la machine et sachant qu'au moins une des saillies (21, 22) est susceptible d'être déplacée en direction oblique par rapport aux surfaces de contact (23) pour bloquer la fermeture à baïonette (22, 34).

2. Système de serrage de pièces à usiner d'après la revendication 1, **caractérisé en ce que** la saillie déplaçable est susceptible d'être déplacée othogonalement par rapport à la direction de placement, sachant que de préférence la saillie déplaçable (21, 22) ou encore les moyens de blocage (21, 22, 23, 34) sont prévus sur l'arbre (11) de la machine.

3. Système de serrage de pièce à usiner d'après la revendication 1 ou 2, **caractérisé en ce que** la saillie (21, 22) est susceptible d'être déplacée par une force appliquée contre un anneau tendeur (26, 40) périmètrique logé avec une petite marge, sachant que notamment l'anneau tendeur est réalisé de façon close et solide et qu'on prévoit de préférence plusieurs saillies (21, 22) mobiles et que celles-ci sont toutes adjacentes à l'anneau tendeur.

4. Système de serrage de pièce à usiner d'après la revendication 3, **caractérisé par** l'application d'une force entre une saillie (21, 22) mobile et l'anneau tendeur (26) au moyen d'une vis (27, 28), sachant que de préférence la vis est logée dans l'anneau tendeur et exerce une pression contre la saillie, sachant que notamment la vis de serrage (27c) présente un filet différentiel (27c', 27c") et s'engage dans l'anneau tendeur et dans la saillie déplaçable et que de préférence le pas du filet (27c') dans la saillie (21) est supérieur à celui (27c") dans l'anneau tendeur.

5. Système de serrage de pièce à usiner d'après une des revendications précédentes, **caractérisé en ce que** la partie de la fermeture à baïonette (22, 34) auprès du moyen de serrage (30) s'engage ou encore saille à l'intérieur de l'arbre (11) de machine avec des saillies (34) radialement saillantes et qu'elle est entourée par les saillies (21, 22) dans l'arbre de machine en tant que partie de la fermeture à baïonette, sachant que de préférence un anneau tendeur (26) d'après la revendication 4 s'étend tout autour des saillies de l'arbre de la machine.

6. Système de serrage de pièce à usiner d'après la revendication 1, **caractérisé par** une fermeture à baïonette (22e, 34e) qui est réalisée de telle manière qu'uniquement une (34e, 50e) de ses parties prévue sur le moyen de serrage (30e) peut être tournée pour une fixation, sachant que par ailleurs la fixation et le blocage du moyen de serrage sur l'arbre de machine (11e) ont lieu sans rotations et/ou sans mouvements.

7. Système de serrage de pièce à usiner d'après la revendication 6, **caractérisé par** un anneau de retenue (50e) qui peut être tourné, situé de préférence sur le moyen de serrage (30e), qui présente en tant que partie de la fermeture à baïonette (22e, 34e) des saillies (34e) orientées en direction radiale, qui, en état fixé, agissent conjointement avec des saillies (22e) orientées en direction radiale sur l'autre partie du système de serrage de pièce à usiner, sachant que les saillies sont adjacentes les unes aux autres par des surfaces de contact (35e) qui s'étendent en direction oblique par rapport à la direction de placement, sachant que notamment au moins une des saillies (21e, 22e) est déplaçable en direction oblique par rapport à la surface de contact pour le blocage.

8. Système de serrage de pièce à usiner d'après la revendication 7, **caractérisé en ce que** la saillie (21e, 22e) susceptible d'être déplacée est déplaçable par une force qui agit contre un élément distributeur de force (40e) périmétrique, sachant que de préférence on prévoit plusieurs saillies susceptibles d'être déplacées et que celles-ci sont toutes adjacentes à l'élément distributeur de force.

9. Système de serrage de pièce à usiner d'après la revendication 8, **caractérisé en ce que** l'élément distributeur de force (40e) est adjacent par une surface oblique (41e) à la saillie (22e) déplaçable, laquelle s'étend en direction oblique, notamment sous un angle compris entre 45° et un peu moins que 90°, par rapport à la direction de mouvement de la saillie susceptible d'être déplacée, sachant que par un mouvement de l'élément distributeur de force le long de la direction longitudinale de l'arbre de la machine (11e) la ou les saillies susceptibles d'être déplacées sont déplacées en restant adjacentes à la surface oblique pour bloquer la fermeture à baïonette (22e, 34e), sachant que de préférence toutes les saillies (21e, 22e) susceptibles d'être déplacées sont adjacentes à l'élément distributeur de force (40e).

10. Système de serrage de pièce à usiner d'après une des revendications précédentes, **caractérisé en ce que** la force nécessaire au blocage de la fermeture à baïonette (22, 34) est toujours présente, en étant notamment générée par un réservoir d'énergie ou un réservoir de force, de préférence par un dispositif à ressort (43), sachant que notamment cette force peut être supprimée par un dispositif de disjonction (45) par une force de disjonction, pour desserrer la fermeture à baïonette.

11. Système de serrage de pièce à usiner d'après une des revendications précédentes, **caractérisé en ce qu'**un moyen de crantage pour un encliquetage dans une position entre un moyen de serrage (30) et un arbre de machine (11), dans laquelle la fermeture à baïonette (22, 34) est fermée pour être ensuite bloquée.
